# EUROPEAN PATENT SPECIFICATION

(11) **EP 0 286 101 B1**
(45) Date of publication and mention of the grant of the patent: **28.07.1993**
(21) Application number: 88105568.5
(22) Date of filing: 07.04.1988
(51) Int. Cl.: G01N 21/47, G01N 35/00, G01N 21/86

(54) **A method for analyzing special component in liquid**
Verfahren zur Analyse von spezifischen Komponenten in Flüssigkeiten
Méthode pour analyser des composants spécifiques dans des liquides

(30) Priority: 07.04.1987 JP 85309/87
(43) Date of publication of application: 12.10.1988
(73) Proprietor: KABUSHIKI KAISHA KYOTO DAIICHI KAGAKU, Kyoto-shi Kyoto 601 (JP)
(72) Inventor: Uchigaki, Takatoshi, Yamashiro-cho Soraku-gun Kyogo (JP); Komada, Yoshito, Ikoma-shi Nara (JP)
(74) Representative: Patentanwälte Hauck, Graalfs, Wehnert, Döring, Siemons

(56) References cited:
- EP-A- 0 180 792
- FR-A- 2 361 651
- FR-A- 2 378 277
- US-A- 4 592 893
- PATENT ABSTRACTS OF JAPAN, vol. 9, no. 296 (P-407)[2019], 22. Nov. 1985 JP-A-60 133 359

## Description

The invention relates to an apparatus for analyzing a special component of a liquid according to the preamble of claim 1.

More particularly, the invention relates to an apparatus analyzing a body fluid, particularly blood, wherein a strip like test piece carries at least a reagent layer to which the liquid to be analyzed is applied.

The technology for analyzing the presence, quantity, or change of special component in blood (plasma, serum, whole blood) has made great progress along with rapid improvement of reagent and analyzing apparatus, and by combination of single item measurement such as a glucose concentration and the information of multiple components the diagnosis of various diseases or organs disorders and synthetic health examination have been generally made to help the treatment.

For example, by set test of GOT, GPT, ALP, LAP, -GTP, and BUN in blood the diagnosis of liver disorders is conducted. To assess synthetically the health of patient in the first examination, blood sugar, creatinine, uric acid, BUN, cholesterol, TP, amylase, LDH, and GOT are analyzed as a profile test. In set examination, there are the combination analysis of glucose, BUN, total cholesterol, creatinine, uric acid, and inorganic phosphorus for the diagnosis of renal function and the combination of glucose, total protein, BUN, total cholesterol, and uric acid for the diagnosis of diabetes. As measurement items other than the above, there are bilirubin, albumin, cholinesterase, triglyceride, CPK, calcium, HBDH, ACP, lipase, serum iron, and lactic acid.

For conducting readily these analysis as a bedside test for in-patients or as a real time test for out-patients, a dry system using a test piece containing a reagent layer is the most appropriate. The reagent layer is prepared by sticking filter paper impregnated by reagents on a substrate or, respectively by drying the reagent layer after it has been applied to a substrate.

For analyzing the liquid applied to a plurality of reagent layers arranged linearly at spaced intervals on a strip like test piece, FR-A-2,361,651 discloses a colormetric measuring unit including a plurality of measuring devices arranged at spaced intervals corresponding to the spacing of the reagent layers, each of said measuring devices including a light emitting element and a photoelectric element for receiving light reflected from an associated reagent layer which light passes through a light transmitting fiber bundle and a colour filter. The signals delivered by the photoelectric elements are processed in a computer for being displayed.

A similar analyzing device is disclosed in FR-A-2,378,277. Therein the reagent layers on a multiple test strip are analyzed one after the other in passing the strip beneath a measuring device. Still further, US-A-4,592,893 teaches a process for the production of analysis test strips including a substrate to which the test field material and a bar-code are applied. Patent abstracts of Japan, vol. 9, no. 296 (P-407) discloses an analysis element on a slide frame to which an information code comprising a conductive material is added to prevent erroneous operation.

While FR-A-2,361,651 and US-A-4,592,893 disclose multiple test pieces for analyzing urine, the measurements taken reach up to ten at most.

FR-A-2,361,651 and US-A-4,592,893 disclose multiple test pieces for analyzing urine, the measurements taken reach up to ten at most.

On the contrary, in the blood, the number of measurement items are 25 to 60, and all measurement can not be conducted by 1 or 2 of test piece. In addition, preparing multi-item test piece for each item necessary for the diagnosis or course observation of every disease is impossible in view of the cost or control in practice.

On the other hand, though several types of multi-item test pieces are prepared limited to the presentative diseases, the necessity of measuring items lacking in the combination occurs inevitably, resulting in the increase of types of necessary test piece. Further, in the case of the measurement of a particular item, the multi-item test piece is used wastefully. This problem may be solved by using together with single item test piece, but exclusive measurement apparatus for each piece is necessary, resulting in defects in view of the cost, place, treatment, and reliability of data owing to the difference of apparatus.

The invention has the object of solving the above problems, and has the object of conducting rapidly a test diagnosis treatment by practicing the measurement of multiple items such as a set or profile test readily in a short time. Further, the invention has the object of providing and apparatus for obtaining correct measurement values by preventing erroneous diagnosis owing to the mistake of test piece in measurement.

In addition, the invention has the object of providing and apparatus for conducting rapidly single item measurements of multiple samples.

To attain these objects, the invention is characterized by the features of claim 1.

According to the invention, the apparatus is so constructed as to be able to measure a multi-item test piece and single item test pieces for the supplement or single test of a special item in the same apparatus to measure multiple special components in blood sample. Besides, a multi-item test piece with plural layers of same reagents can be used for the test of special item of multiple samples.

A photometric means wherein a plurality of measuring devices each including a light source element and a light receiving element, are arranged linearly in spaced intervals and a multi-item test piece is fed to the photometric means sideways so that each reagent layer of the same test piece is separately observed at the corresponding light receiving element.

### Brief Description of the Drawings

Fig.1 shows an example of test piece used in the invention, Fig.1 (a) showing single item test piece, Fig.1 (b) multi-item test piece.
Fig.2 is a rough oblique drawing showing an example of the main parts of the invention, Fig.3, Fig.4, and Fig.5 show the rough drawings of the different apparatus, Fig.3 and Fig.4 are plans, and Fig.5 is an oblique.

### Detailed Description of the Invention

The method of the invention is directed to the measurement of multiple items of a sample using both multi-item test pieces and single item test pieces.

By the use of multi-item test piece with plural reagent layers for specified items, the specified items of sample are analyzed, and for the supplement the other one or plural items are measured by the use of single item test piece. By the use of the method, all items are covered by preparing multi-item test piece in combination to some extent and by preparing single item test piece for the other items. In addition, measuring operation and times are remarkably shortened compared with the case wherein all items are analyzed by single item test piece.

Further, the apparatus of the invention can also be used in the analysis of one item in multiple samples. For example, in the case of measurement of the same item in 7 samples, 6 samples are analyzed by multiple items test piece(in this case test piece with 6 layers of the same reagent), and one residual sample is analyzed by single item test piece.

Thus, without a wasteful use of multi-item test piece, similarly with the above mentioned, measuring operation and times are shortened compared with the case wherein all items are analyzed by single item test piece.

The apparatus of the invention will be described in the following.

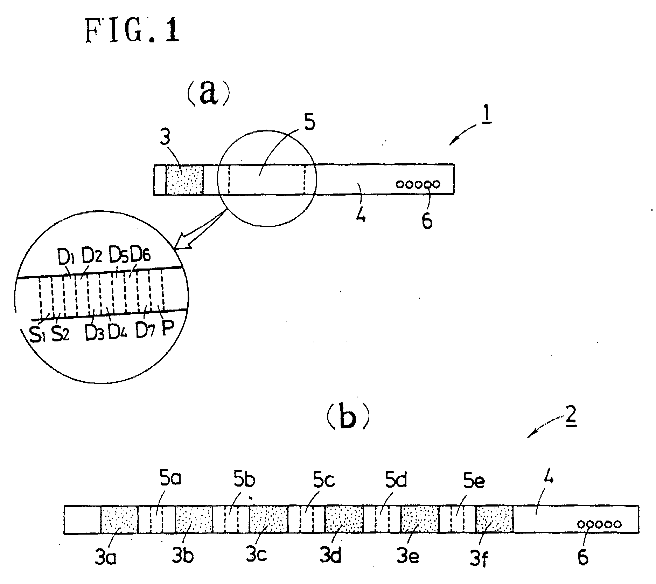

Fig.1 shows an example of test piece of the invention. Fig.1 (a) and (b) show single item test piece 1 and multi-item test piece 2 respectively. In single item test piece 1, one reagent layer is fixed on the end of the stick 4, a bar-code is put on the center as test piece judgement means, and the notation 6 of measuring substance is put near the base. For example, the bar-code is composed of start bits(S1, S2), data bits(D1, D2, ··· D7), and a parity bit(P). Stick 4 is, for example, transparent plastic sheet cut to ca 5 mm width.

On the other hand, in multi-item test piece, plural(6 in Fig.1 (b)) reagent layers 3a, 3b ··· 3f impregnated reagents react with each different substance are fixed in order with a specified space from the end of the stick 4, and the names of plural measurable substances or the notation 6 of diseases measurable with the combination are written near the base. As means of judgement of test piece, bar-codes 5a, 5b, ··· 5e are put between each reagent layer 3a, 3b ··· 3f, but in this example only one data bit on each position is put because of the reading direction. The bar-codes 5a ··· may be only mark, that is, by the presence of the mark between each reagent layer the type of multi-item test piece is judged. Since 32 types of test piece are discriminated by 5 positions of mark, even such simple mark notation is useful sufficiently.

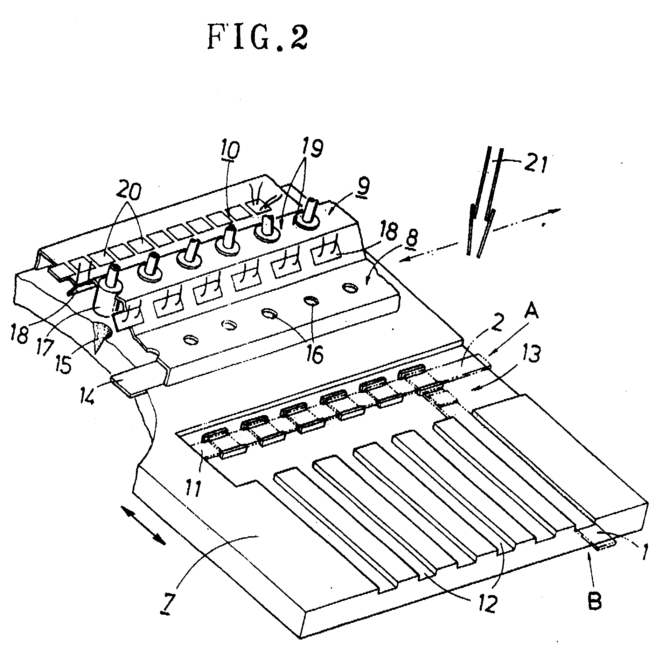

Fig.2 shows roughly the main part of the invention apparatus composed of a movable test piece table 7 long in length, a fixed sample liquid applying part 8 covering the part of the test piece table 7 on the upper part of the table, a photometric part 9, and a test piece judging part 10.

On the test piece table 7, a lateral groove 11 for setting a multi-item test piece 2 and plural(6 in Fig.) longitudinal grooves 12 ··· for setting single item test pieces 1 are provided. The lateral groove 11 is provided nearly on the center of the test piece table 7 parallel with the photometric part 9. The longitudinal grooves 12 are provided on the positions corresponding to the positions of the reagent layers of test piece 2 set on the lateral groove 11 vertical to 11.

On the position of the lateral groove 11 and the head of the longitudinal groove 12, that is the position of each pad 3, 3a, 3b ··· of test pieces, heaters are set as constant temperature zone 13.

On the front of the lateral groove 11, a standard reflex piece of white ceramic plate 14 and plural(6 in the example) black damping cylinder 15 are provided. These are for the correction of reflectivity, which is conducted as the former of reflectivity 100% and the latter of reflectivity 0%, that may be a black plate.

The sample liquid applying part 8, the photometric part 9, and the test piece judging part 10 are all together closely fixed at the upper part of the test piece table 7, being useful in keeping temperature as the constant temperature zone 13.

The sample liquid applying part 8 is a plate of small width provided eyeholes 16 ··· at the position of the reagent layer of each test piece.

In the photometric part 9, plural(6 in Fig.) mesurement devices 19 of combination of the light source part 17 and the light receiving part 18 are arranged sideways. The light source part 17 radiates light(multi-wavelength) from the light source(omission in Fig.) on each reagent layer, in the example the end of light fiber(light-guide) being set over the position of the reagent layer. The light reiving part 18 receives light reflecting from the reagent layer, composed of a light detector. As a mesurement device 19, an integrating sphere or the other device may be also usable.

The test piece judging part 10 reads the bar-code of each test piece, arranged sidways plural(11 in Fig.) measurement devices 20 ··· composed of the photo-interruptor of combination of a luminous diode and a photo-transistor. The measurement devices 20 are more that the mesurement deveces 19 of the photometric part 9, because the positions of bar-code 5, 5a ··· shift according to multi-item test piece or single item test piece. The measurement device 20 may be composed of a light-guide and a light detector.

The test piece judging part 10 may be positioned forer than the sample liquid applying part 8.

The analysis procedure of blood sample by the invention apparatus will be described in the following.

First, a multi-item test piece 2 is set on the lateral groove 11. (the state in Fig.2 A) Next, the test piece table 7 is made a large straight advance to send the test piece 2 to the position of the test piece judging part 10, and bar-codes 5a, 5b ··· 5e are read to judge the type of the test piece 2, and the type of measurement of each reagent layer 3a, 3b ··· 3f (end-point method, rate method) and the time from reaction to measurement start are determined based on the data memorized by micro-computer (omission in Fig.). At the same time, the surface of each reagent layer is observed, and if a wet surface is found, it may be cancelled as measured.

Next, the test piece table 7 is made back to bring the test piece under the sample liquid applying part 8, and the same sample is applied to each reagent layer 3a, 3b ··· by a nozzle 21 from a sample vessel(omission in Fig.) set in advance. After applying the test piece table 7 is a little made forward, and after specified time the reflectivity of each reagent layer is measured.

Before measurement the reflectivity of each measurement device 19 is corrected by the standard reflectivity piece 14 and the black damping cylinder 15. Obtained data are memorized in microcmputer and output in output device(omission in Fig.) converted to the concentration or the other mesurement value based on the calibration data memorized in advance. After finishing measurement the test piece is removed and a new multi-item test piece 2 is prepared and a similar test is continued.

According to the state of patient, in case necessary measurement items are satisfied, the measurement is finished at this point. In case there are plural samples, the test piece is removed after finishing measurement, a new multi-item test piece is prepared, similar operation is continued.

In case measurement items are not satisfied with one type of multi-item test piece 2, a single item test piece 1 in accordance with the lacking item(possible till 6 items in this example) is put on the longitudinal groove 12 (the state in Fig.2 B). Next, similarly the judgement of the test piece, sample liquid application, and measurement are conducted. Multi-item test piece 2 and single item test piece 1 may be set at the same time on each groove 12, 12 ··· and measured continuously.

Single item test piece is also used for screening tests wherein an item(may be 2∼3 items) on multiple samples is measured. In the case of many samples, the use of multi-item test piece with the same reagent layer 3a, 3b ··· remarkably simplifies the measurement operation.

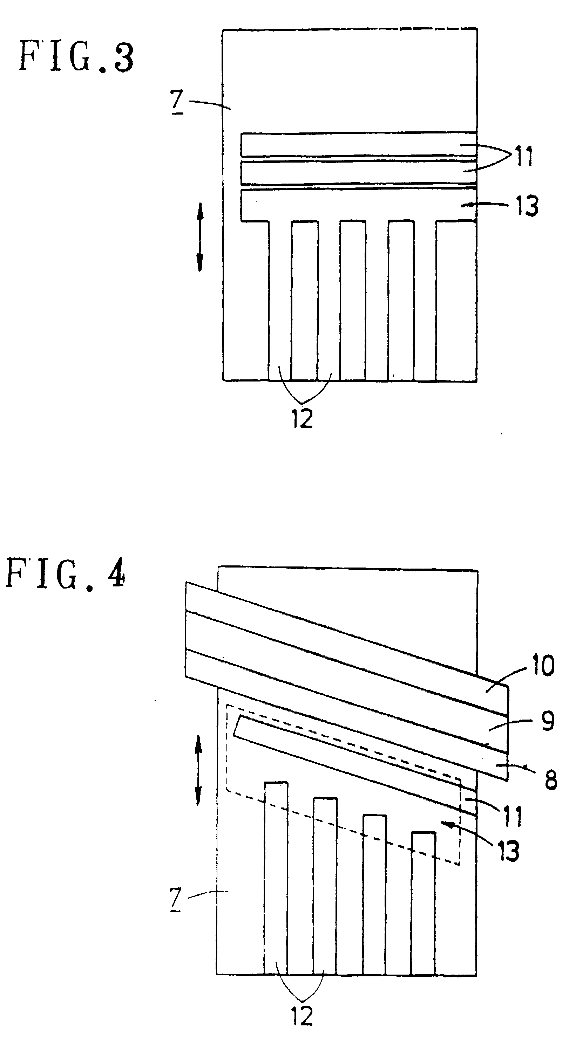

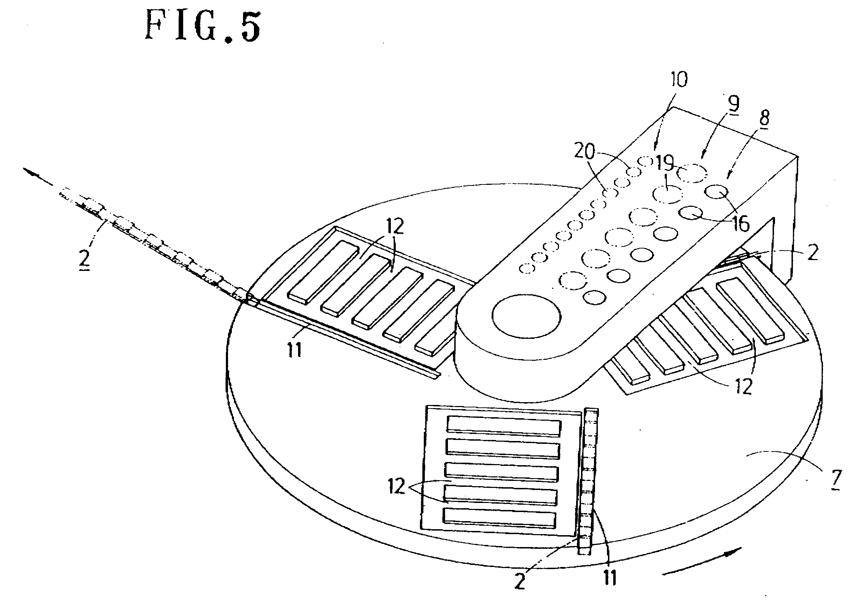

On the form and movement of the test piece table 7, the other varieties are considered. For example, 2 or more of the lateral groove 11, 11 as Fig.3 or the lateral groove 11 made oblique as Fig.4 are considered. In the former, plural multi-item test pieces 2 can be set at the same time, and continuous treatment of multiple samples or multi-item measurement with different test pieces 2 is simplified. In the latter, test piece 2 is easily set. Fig.5 shows a test piece table 7 of disk type, which is so constructed that test piece setting, judgement, measurement, and removal are conducted in order by several groups of the set of the lateral groove 11 and the longitudinal groove 12 ···, being suited for multiple sample treatment.

In examples above-mentioned, the longitudinal grooves 12 ··· set single item test piece are positioned in agreement with each reagent layer 3a, 3b ··· of multi-item test piece set on the lateral groove 11. However, the space between each longitudinal groove 12 may be made independent of the pitch of each reagent layer 3a, 3b ···, and any number of the longitudinal groove may be provided. In this case, the photometric part 9, each mesurement device 19 ···, 20 ··· of the test piece judging part 10, and the eyeholes 16 ··· of the sample liquid applying part 8 are provided by the number of reagent layer of each test piece 1, 2. If each longitudinal grrove 12 ··· is shifted sideways to agree with the position of the bar-code of multi-item test piece 2, 11 of the mesurement devices 19 and the eyeholes 16 and 6 of the mesurement device 20 meet the purpose.

Further, as a means for judging each test piece, in place of bar-code, color indication, eyehole, or notch may be provided by using the corresponding detecting means, or each reagent layer may be observed by transmitted light or fluorescence in place of reflected light.

As mentioned above, the invention provides an apparatus, wherein both types of single and multi-item test piece can be measured by said apparatus. To the photometric part wherein plural light receiving parts are sideways arranged with specified space, in the case of a multi-item test piece, each reagent layer applied sample of the same test piece is fed sideways to the corresponding light receiving part, and in the case of a single item test piece, the reagent layer applied sample of each test piece is fed lengthwise to the corresponding light receiving part.

Accordingly, in the case of multi-item test such as a set test of various diseases or a profile test in a new patient, the test is conducted readily and rapidly without the problem of wrong diagnosis owing to the mistake of test piece, avoiding the reexamination of patient, resulting in the decrease of medical cost. Further, also in single item measurement, by using multi-item test piece with plural pads of the same type, multiple samples are rapidly treated.

## Claims

1. Apparatus for analyzing a special component of a liquid applied to a reagent layer (3) of a striplike single-item test piece (1) and on each of the reagent layers (3a-3f) of a striplike multi-test piece (2) having a plurality of separate reagent layers therealong at spaced intervals, said piece also having a section with an identifying code (6), comprising:
a photometric means (9) including a plurality of measuring devices (19) arranged linearly at spaced intervals corresponding to the spacing of said reagent layers of a multi-test piece, each of said photometric means including a light emitting element (17) and a photoelectric element (18), said photometric means also including means (10) for identifying the code on the code section of a test piece,
a test piece table (7) having a first groove (11) to accept the multi test pieces (2) placed parallel to the line of the plurality of said measuring devices (19) and a plurality of grooves (12) each substantially transverse to said measuring devices (19) for accepting single-item test pieces (1),
means for reciprocating said table (7) in a direction substantially transverse to the line of the plurality of measuring devices (19) to bring the reagent layers of both types of the test pieces (1, 2) to a position to be measured by a respective measuring device,
liquid applying means (8) adjacent to said measuring devices (19) to supply the liquid to the reagent layers of both types of test pieces.

## Patentansprüche

1. Vorrichtung zum Analysieren einer bestimmten Komponente einer Flüssigkeit, die auf eine Reagenzschicht (3) eines Einfach-Teststreifens (1) und auf jede der Reagenzschichten (3a bis 3f) eines Mehrfach-Teststreifens (2) aufgetragen wird, der mehrere separate Reagenzschichten längsweise in beabstandeten Intervallen aufweist, wobei der Teststreifen auch einen Abschnitt mit einem identifizierenden Code (6) aufweist, mit:
photometrischen Mitteln (9) mit mehreren, linear in beabstandeten Intervallen entsprechend den Abständen der Reagenzschichten auf einem Mehrfach-Teststreifen angeordneten Meßeinrichtungen (19), wobei die photometrischen Mittel jeweils ein Licht emittierendes Element (17) und ein photoelektrisches Element (18) aufweisen und die photometrischen Mittel auch Mittel (10) zum Identifizieren des Code auf dem Codeabschnitt eines Teststreifens aufweisen,
ein Teststreifentisch (7) mit einer ersten Nut (11) zum Aufnehmen von parallel zur Zeile der Meßeinrichtungen (19) angeordneten Mehrfachteststreifen (2) und mit mehreren Rillen (12), jede im wesentlichen quer zu den Meßeinrichtungen (19) zum Aufnehmen von Einfach-Teststreifen (1),
Mittel zum Hin- und Herverschieben des Tisches (7) in einer Richtung im wesentlichen quer zur Zeile der Meßeinrichtung (19), um die Reagenzschichten beider Arten von Teststreifen (1, 2) in eine Position zu bringen, in der sie von einer jeweiligen Meßeinrichtung gemessen werden,
Mittel (8) zum Auftragen von Flüssigkeit neben den Meßeinrichtungen (19), um Flüssigkeit auf die Reagenzschichten beider Arten von Teststreifen aufzutragen.

## Revendications

1. Appareil pour analyser un composant spécial dans un liquide appliqué sur une couche de réactif (3) d'une éprouvette d'essai unique en forme de bande (1) et sur chacune des couches de réactif (3a-3f) d'une éprouvette d'essais multiples en forme de bande (2) portant une pluralité de couches séparées de réactif écartées les unes des autres, ladite écartées les unes des autres, ladite éprouvette possédant également une zone comportant un code d'identification (6), comportant :
un dispositif photométrique (9) comportant une pluralité de dispositifs de mesure (19) agencés linéairement selon des intervalles espacés correspondant à la distance entre lesdites couches de réactif d'une éprouvette à essais multiples, chacun desdits dispositifs photométriques comportant un élément émetteur de lumière (17) et un élément photoélectrique (18), ledit dispositif photoélectrique comportant également des moyens (10) pour identifier le code de la zone codée d'une éprouvette,
une table pour éprouvettes (7) présentant une première gorge (11) destinée à recevoir les éprouvettes d'essais multiples (2) disposées parallèlement à la rangée de la pluralité de dispositifs de mesure (19) et une pluralité de gorges (12) ménagées chacune de façon sensiblement transversale auxdits dispositifs de mesure (19), pour recevoir les éprouvettes d'essai unique (1),
des moyens pour imprimer un mouvement de va-et-vient à ladite table (7) dans une direction essentiellement transversale à la rangée de la pluralité de dispositifs de mesure (19) afin d'amener les c ouches de réactif des deux types d'éprouvette (1, 2) en position pour être mesurées par un dispositif respectif de mesure,
des moyens d'application de liquide (8) adjacents auxdits dispositifs de mesure (19) afin d'appliquer le liquide sur les couches de réactif des deux types d'éprouvettes.
